# EUROPEAN PATENT SPECIFICATION

(11) **EP 0 997 889 B1**
(45) Date of publication and mention of the grant of the patent: **23.08.2006**
(21) Application number: 98309152.1
(22) Date of filing: 09.11.1998
(51) Int. Cl.: G11B 7/09

(54) **Pickup actuator**
Einrichtung zur Bewegung einer Abtastvorrichtung
Actionneur pour déplacer une tête de lecture

(30) Priority: 28.10.1998 KR 9845251
(43) Date of publication of application: 03.05.2000
(73) Proprietor: SAMSUNG ELECTRONICS CO., LTD., Suwon-City, Kyungki-do (KR)
(72) Inventor: Song, Myoung-jong, Paldal-gu, Suwon-city, Kyungki-do (KR); Kim, Young-chul, Paldal-du, Suwon-city, Kyungki-do (KR)
(74) Representative: Robinson, Ian Michael

(56) References cited:
- EP-A- 0 371 799
- EP-A1- 0 987 668
- US-A- 5 566 149
- US-A- 5 604 641
- US-A- 5 787 067
- PATENT ABSTRACTS OF JAPAN vol. 018, no. 135 (P-1705), 7 March 1994 (1994-03-07) & JP 05 314513 A (SANYO ELECTRIC CO LTD), 26 November 1993 (1993-11-26)

## Description

The present invention relates to a pickup actuator employed in an optical device for recording/reproducing information on/from an optical disc.

The field of optical means for recording/reproducing information on/from information recording medium such as an optical disc is already in the limelight as a new technique of the coming era. A pickup actuator is considered to be an important component of the optical device, since it determines the speed of recording and reproducing of information. Such pickup actuator schematically comprises a base member, a lens holder, and a lens holder driving means. The lens holder is movably disposed with respect to the base member. An objective lens is mounted on the lens holder. The objective lens projects a light beam on to a recordable side of the optical disc to read the optical signal, or record the information on the optical disc. The lens holder driving means drives the lens holder in directions appropriate for focusing and tracking.

US 5 604 641 discloses an objective lens actuator used in an optical head to deal with various kinds of optical discs comprising a bent metal plate and a lens holder which is disposed on the bent metal plate in such a manner that the lens holder is suspended by two pairs of wire spring so as to allow the lens holder to be moved for tracking and focusing and on which an objective lens is mounted. The actuator comprises a lens holder driving means for driving the lens holder for focusing and tracking. A pair of damping boxes provide silicon gel between the lens holder driving means and the wire springs for damping vibration occurring at the lens holder when the lens holder is driven. The bent metal plate provides yokes on which magnets are attached.

EP 0 987 688 describes a pick-up actuator having a base member as a fixed member, a lens holder as a travelling member and a damping fluid therebetween. The damping fluid damps a vibration occurring with the lens holder when the lens holder is driven. Such vibration is directly dampened by the damping fluid being applied between the base member and the lens holder.

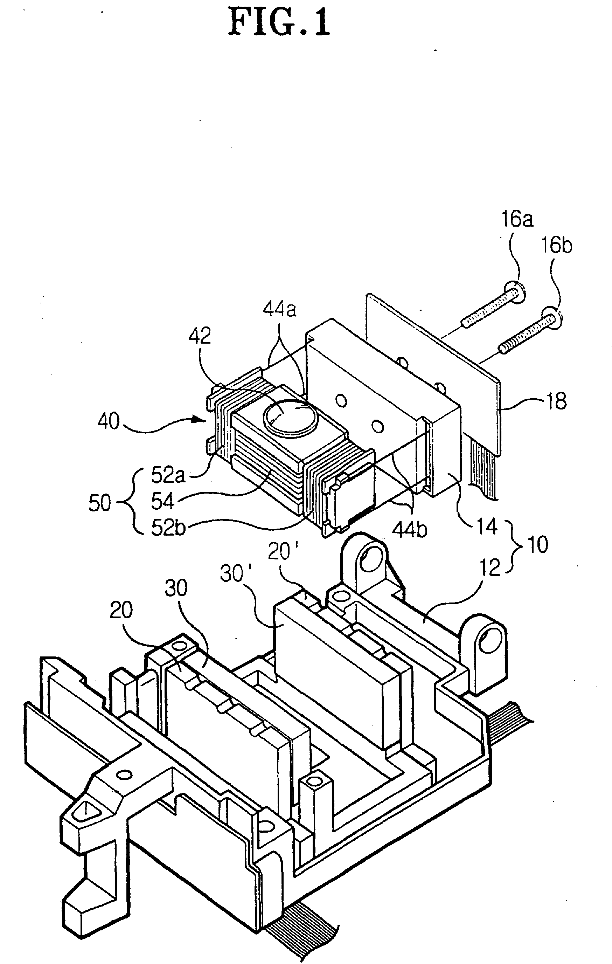

An example of a prior art pickup actuator is shown in Figures 1 to 3.

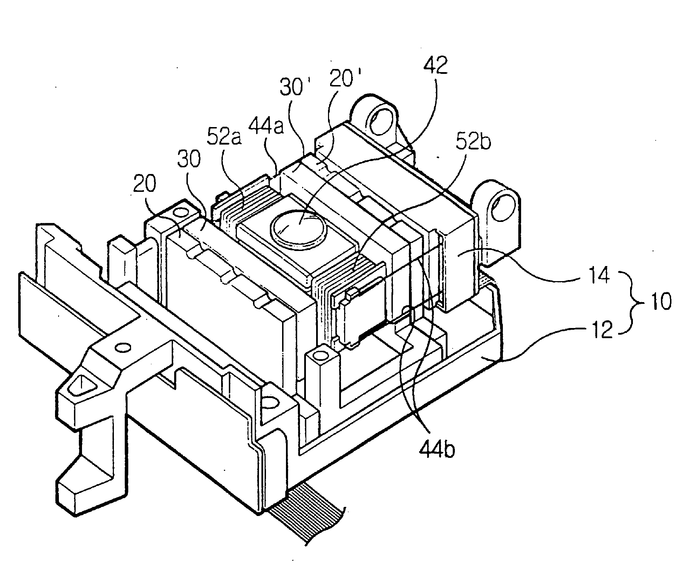

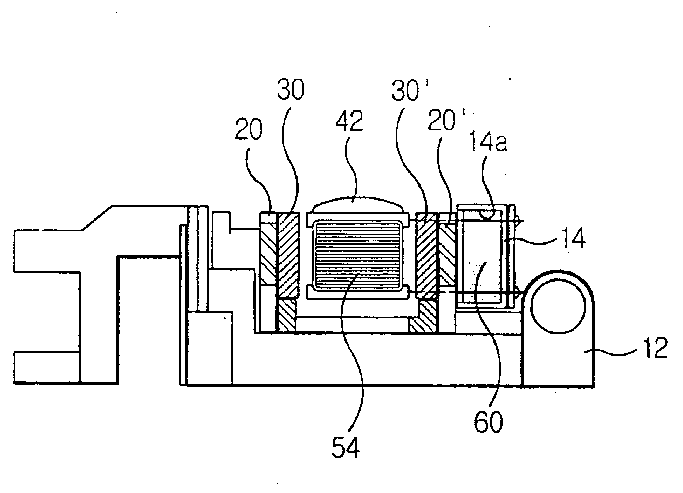

Figure 1 is an exploded perspective view showing a conventional pickup actuator, Figure 2 is a perspective view showing the pickup actuator assembled, and Figure 3 is a sectional view showing a main portion of the pickup actuator shown in Figure 2.

As shown in Figures 1 to 3, a base member 10 comprises a body portion 12 and a holder supporting portion 14. A pair of yokes 20 and 20' are disposed at an upper side of the body portion 12, while facing each other and having a predetermined distance therebetween. The holder supporting portion 14 is attached to an outer side surface of one 20' of the yokes 20 and 20' by a plurality of screws 16a and 16b.

Further, a pair of magnets 30 and 30' are attached to an inner side surface of the yokes 20 and 20'. The magnets 30 and 30' form a magnetic circuit. The yokes 20 and 20' function to maximize and concentrate the magnetic flux density toward a desired direction.

A lens holder 40 is disposed between the magnets 30 and 30'. An objective lens 42 is mounted on the lens holder 40. The lens holder 40 is suspended at the holder supporting portion 14 of the base member 10 by two pairs of wire springs 44a and 44b such that the lens holder 40 is movable. One end of each of the wire springs 44a and 44b is connected to respective sides of the lens holder 40, while the other ends thereof are connected to the holder supporting portion 14 after passing through a space 14a defined at an inner portion of the holder supporting portion 14.

Further, a driving coil 50 is disposed at the lens holder 40 together with the magnets 30 and 30', constituting a lens holder driving means.

The driving coil 50 has a pair of focusing coils 52a and 52b and a tracking coil 54. The focusing coils 52a and 52b are wound around both sides of the lens holder 40, while the tracking coil 54 is wound in a perpendicular fashion with respect to the focusing coils 52a and 52b. The focusing coils 52a and 52b and the tracking coil 54 move the lens holder 40 toward directions appropriate for focusing and tracking, in corporation with the magnets 30 and 30'.

In a conventional pickup actuator constructed as above, focusing and tracking of the objective lens 42 are performed by an electromagnetic interaction between the magnets 30 and 30', the focusing coils 52a and 52b, and the tracking coil 54.

The above conventional pickup actuator, however, has a drawback as follows. Since the lens holder 40 is suspended at the holder supporting portion 14 by the wire springs 44a and 44b, during focusing and tracking of the objective lens 22, a lot of time is taken for the objective lens 42 to reach the designated position and be settled therein.

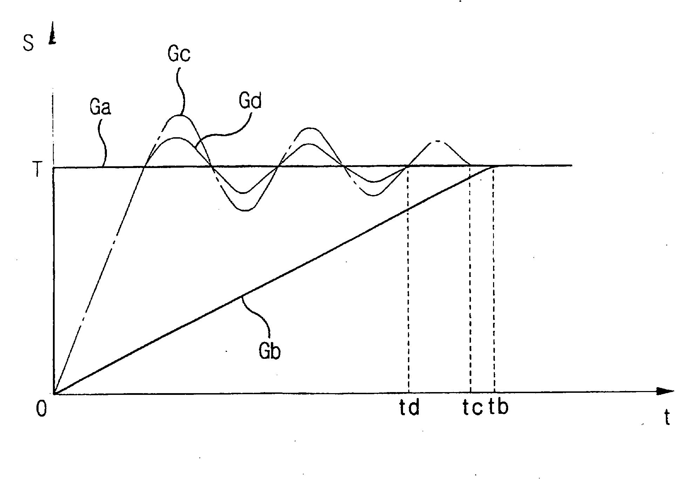

The conventional pickup actuator will now be described in greater detail with respect to Figure 4. As shown in Figure 4, an X-axis ("S") is a distance that the objective lens 22 is supposed to be moved to be settled in the designated position, and an Y-axis ("t") is a time taken for the objective lens 22 to reach the designated position and be settled therein.

"Ga" in Figure 4 is a line for indicating an ideal movement of the objective lens 42. In this case, it takes "0" (zero) seconds for the objective lens 42 to reach the designated position "T" and be settled therein. However, such ideal movement is impossible because the objective lens 42 would need to have a speed reaching an infinite value in an instant in order to be instantly moved to the position "T".

"Gb" in Figure 4 is a line for indicating an actual movement of the objective lens 42. In this case, it takes times "t_{b}" for the objective lens 42 to reach the position "T".and be settled therein.

If the objective lens 42 is moved at a greater speed the time can be shortened to "t_{c}", however, there inevitably occurs the vibration of the objective lens 42 until the objective lens 42 is settled in the position "T".

As described above, the greater the speed of the moving objective lens 42, the greater the vibration of the objective lens 42 has. Thus, if the vibration is efficiently damped, the objective lens 22 can be settled in the position "T" more rapidly.

In the past, it has been suggested that a damper bond 60 in a gel state be injected into the inner portion of the holder supporting portion 14 in order to damp the vibration. Due to the presence of the damper bond 60, the vibration transmitted through the wire springs 44a and 44b are damped more rapidly. (See line. "Gd" in Figure 4).

Despite the damper bond 60, however, there is a limit to increasing the speed of the focusing and tracking operation of the objective lens 42, since the vibration occurring at the lens holder 40 is damped by the damper bond 60 only after the vibration has been transmitted through the wire springs 44a and 44b to the damper bond 60.

Particularly when the optical device is employed in automobiles which have intensive outside vibrations, or when the physical shock is exerted to the optical device, the vibration occurring at the lens holder 40 is not quickly damped, and there occurs a mis-function of the optical device.

Further, the damper bond 60 has to be injected into the inner space 14a defined within the holder supporting portion 14 from a side thereof. Thus, injecting of the damper bond 60 itself has been a complex process, which deteriorates a productivity of the optical pickup device.

In addition, after injecting the damper bond 60, the damper bond 60 has to be solidified to some degree by ultraviolet rays radiated thereto. Thus, a manufacturing process of the optical pick device becomes more complex, and a manufacturing cost thereof accordingly increases.

The present invention has been made with a view to overcoming above-described problems, and accordingly, it is an aim of embodiments of the present invention to provide a pickup actuator capable of rapidly moving the objective lens to a designated position by rapidly damping a vibration occurred at a lens holder during a focusing and tracking operation of an objective lens.

Another aim of the embodiments of the present invention is to provide a pickup actuator capable of preventing a possible mis-function of the optical device by rapidly damping a vibration occurring at a lens holder caused by an outside vibration or shock.

Yet another aim is to provide a pickup actuator which does not need a damper bond injection process, thus has a simpler manufacturing process along with less manufacturing costs.

According to the present invention there is provided a pickup actuator as set forth in claim 1 or claim 14 appended hereto. Further features of the present invention will be apparent from the dependent claims and the description that follows.

According to a first aspect of the present invention there is provided a pickup actuator comprising: a base member; a pair of yokes disposed on the base member while being spaced from each other at a predetermined distance; a pair of magnets respectively attached along a front portion of each of said magnets to inner side surfaces of the yokes; the magnets having each a side portion substantially orthogonal to said front portion; a lens holder which is suspended by two pairs of wire springs so as to be moved for focusing and tracking in a space defined between the magnets, and on which an objective lens is mounted; a driving coil which is disposed on the lens holder and drives the lens holder for focusing and tracking by electromagnetically interacting with the magnets; a pair of supporting plates disposed on the wire springs, said wire springs are supporting the lens holder, so that said supporting plates have a predetermined gap with the side portions of the magnets; and a damping fluid which is applied between the pair of supporting plates and both side portions of the magnets, for damping the vibration occurred at the lens holder when the lens holder is driven.

Preferably, the supporting plates are positioned between the wire springs so as to be in contact with each of the wire springs. Alternatively, the wire springs are disposed between the supporting plates so as to be contacted with each of the supporting plates.

Preferably, a pair of second wire springs extended from the both sides of the lens holder in a symmetrical relation with respect to the first wire springs; a pair of second supporting plates respectively disposed on the second wire springs, while being spaced from side portions of the magnets at a predetermined distance; and a second damping fluid which is applied between the pair of second supporting plates and the side portions of the magnets being adjacent to the second supporting plates, and which damps the vibration occurring at the lens holder when the lens holder is driven.

Preferably, the second supporting plates are positioned between the wire springs so as to be contacted with each of the wire springs. Alternatively, the wire springs are disposed between the second supporting plates so as to be contacted with each of the second supporting plates.

Preferably, the first and/or second supporting plates are made of a nonmagnetic material. Preferably, the nonmagnetic material is a plastics material.

Preferably, the first and/or second damping fluid has a viscosity ranging from 1000cP to 2000cP at about 27°. Preferably, the first and/or second damping fluid is a magnetic fluid having a magnetic property in the magnetic field. Preferably, the magnetic fluid is magnetized to 100G - 200G in a magnetic field of 3~4k0e. Preferably, the magnetic fluid is in a colloid state, wherein magnetic particles are stably dispersed. Preferably, the magnetic particles comprise Fe₃O₄.

Preferably, the pair of yokes are provided for maximizing and concentrating the magnetic flux density toward a desired direction, wherein the yokes are spaced from each other at a predetermined distance on the base member while facing each other, and the magnets are respectively attached to inner side surfaces of the yokes.

According to the preferred pickup actuator, when there occurs the vibration at the lens holder, the vibration is directly damped by the damping fluid disposed between the magnets and the wire springs which are supporting the lens holder. Thus, an objective lens is allowed to reach the designated position more rapidly.

Further, since there is no need for injection of damper bond into an inner portion of the holder supporting portion, the manufacturing processes of optical pickup becomes simpler, and the manufacturing costs thereof accordingly decreases.

For a better understanding of the invention, and to show how embodiments of the same may be carried into effect, reference will now be made, by way of example, to the accompanying diagrammatic drawings, in which:
Figure 1 is an exploded perspective view showing a conventional pickup actuator;
Figure 2 is a perspective view showing the pickup actuator of Figure 1 assembled;
Figure 3 is a sectional view showing a main portion of the pickup actuator of Figure 2;
Figure 4 is graph for explaining a damping effect obtained by a conventional damper bond;
Figure 5 is a perspective view showing a pickup actuator according to the first preferred embodiment of the present invention;
Figure 6 is a plan view showing a pickup actuator of Figure 5;
Figure 7 is a graph for explaining a damping effect obtained by a damping fluid according to an embodiment of the present invention;
Figure 8 is a perspective view showing a pickup actuator according to the second preferred embodiment of the present invention; and
Figure 9 is a plan view showing a pickup actuator of Figure 8.

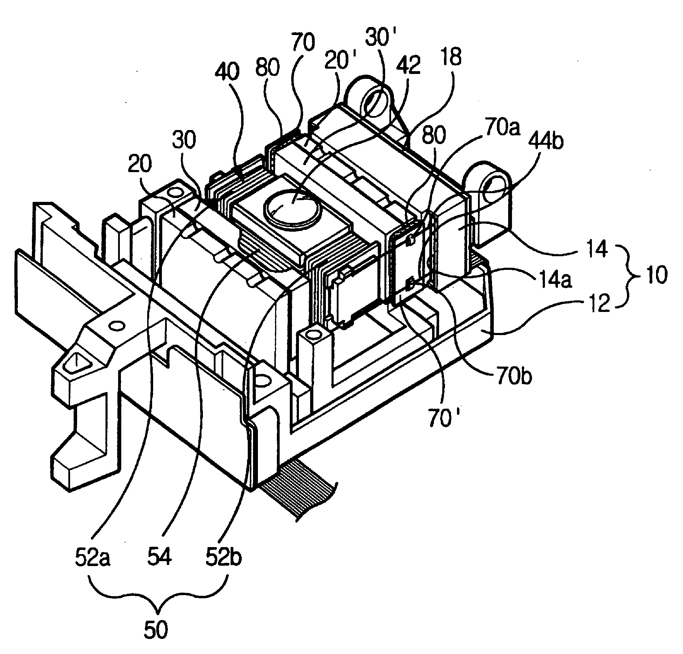

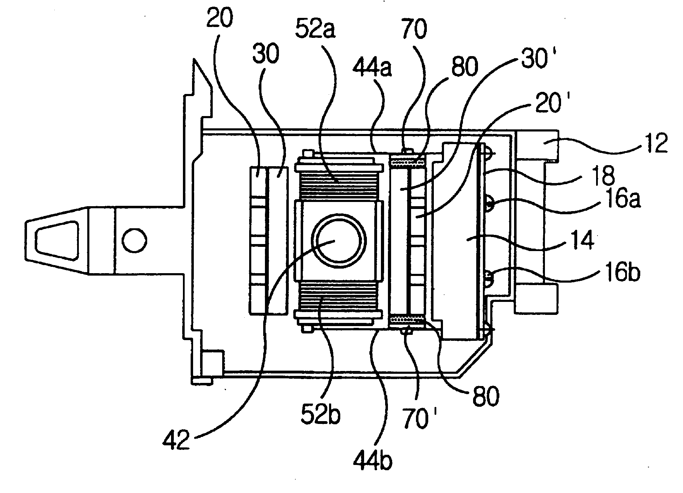

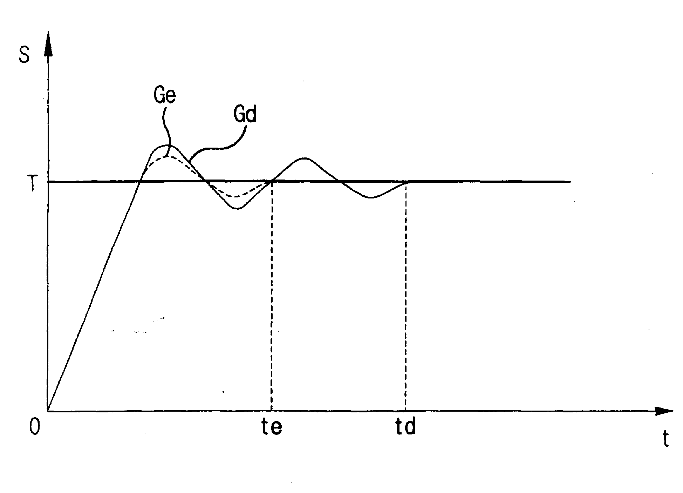

Referring firstly to Figure 5, a pickup actuator according to the first preferred embodiment of the present invention is shown. Also, Figure 6 is a plan view showing the pickup actuator of Figure 5, and Figure 7 is a graph for explaining a damping effect obtained by a damping fluid as used in this embodiment.

It will be understood that like or equivalent elements to those described above in relation to the prior art will be given the same reference numerals below and a detailed description of these elements will not be repeated here. Accordingly, a reference numeral 10 in the figures is a base member, 20 and 20' are yokes, 30 and 30' are magnets, 40 is a lens holder, and 50 is a driving coil.

As shown in Figures 5 and 6, the base member 10 comprises a body portion 12 and a holder supporting portion 14.

The yokes 20 and 20' are disposed at the body portion 12 of the base member 10, while being spaced from each other at a predetermined distance. The holder supporting portion 14 is attached to an outer side surface of the yokes 20' by a plurality of screws 16a and 16b.

Further, the magnets 30 and 30' are attached to inner side surfaces of the yokes 20 and 20', respectively. The magnets 30 and 30' form a magnetic circuit. The yokes 20 and 20' function to maximize and concentrate the magnetic flux density toward a desired direction.

The lens holder 40 is disposed between the magnets 30 and 30' which are disposed at the base member 10. An objective lens 42 is mounted on the lens holder 40, approximately at a middle portion of the lens holder 40. The lens holder 40 is suspended at the holder supporting portion 14 of the base member 10 by two pairs of wire springs 44a and 44b such that the lens holder 40 is movable. One end of each of the wire springs 44a and 44b is connected to respective sides of the lens holder 40, while the other ends thereof are respectively connected to the holder supporting portion 14 after passing through each space 14a defined at both sides of the holder supporting portion 14.

The driving coil 50 is disposed at the lens holder 40, and constitutes a lens holder driving means together with the magnets 30 and 30'. The driving coil 50 has a pair of focusing coils 52a and 52b, and a tracking coil 54. The focusing coils 52a and 52b are wound around the both sides of the lens holder 40, while the tracking coil 54 is wound in a perpendicular fashion with respect to the focusing coils 52a and 52b. Here, the focusing coils 52a and 52b, and the tracking coil 54 move the lens holder 40 toward the directions of focusing and tracking, in cooperation with the magnets 30 and 30'.

The arrangement shown in Figures 5 and 6 further comprises two supporting plates 70 and 70' and damping fluid 80. The supporting plates 70 and 70' are respectively disposed on the two pairs of wire springs 44a and 44b which are supporting the lens holder 40. The supporting plates 70 and 70' are also positioned adjacently to the side portion of the magnets 20'. The supporting plates 70 and 70' are respectively disposed on the wire springs 44a and 44b in such a manner that the wire springs 44a and 44b are hung on a pair of hooks 70a and 70b which are formed integrally on respective side surfaces of the supporting plates 70 and 70'. Each of the hooks 70a or 70b is spaced from the other at a predetermined distance. Such a structure of the supporting plates 70 and 70', however, is not limited to the example suggested here, but can be varied in many ways. Preferably, the wire springs 44a and 44b are not fixedly attached to the hooks 70a, 70b.

Although it is shown that the supporting plates 70 and 70' are disposed between the two pairs of wire springs 44a and 44b, the wire springs 44a and 44b may be disposed between the supporting plates 70 and 70'.

Since the supporting plates 70 and 70' have to be spaced from the side of the magnet 30' for the functional purpose, it is preferable that the supporting plates 70 and 70' are made of nonmagnetic material, and more preferably made of a plastics material.

The damping fluid 80 is applied between the supporting plates 70 and 70' and the magnets 30 and 30' which are adjacently positioned to the supporting plates 70 and 70'. The damping fluid 80 functions to damp a vibration of the lens holder 40, when the lens holder 40 is moved toward the directions of focusing and tracking. Accordingly, the vibration which is occurred when the lens holder 40 is moved toward the directions of focusing and tracking and transmitted to the wire springs 44a and 44b are more efficiently damped.

The damping fluid 80 is a magnetic fluid whose magnetic particles are not separated from the fluid 80 even when the centrifugal force of high intensity or the magnetic field is exerted to the fluid 80. Particularly, the magnetic fluid is in a colloid state, wherein the magnetic particles are stably dispersed. Here, Fe₃O₄ can be utilized as the magnetic particle.

It is preferable that the damping fluid 80 has a viscosity ranging from 1000cP to 2000cP, at 27°C. Additionally, it is preferable that the damping fluid 80 is magnetized to a degree from 100G to 200G in the magnetic field of 3~4k0e.

Accordingly, due to the viscosity thereof, the damping fluid 80 damps the vibration of the lens holder 40. Further, the damping fluid 80 does not gravitate downward but stays properly between the magnets 30 and 30' and the lens holder 40, due to a magnetic property thereof.

A preferred example of such damping fluid 80 is a magnetic fluid comprising 4~6% of magnetite, 16~20% of oil soluble dispersant, 73~80% of carrier liquid, and 0~1% of aromatic amine.

In the pickup actuator constructed as above, the lens holder 40 is moved toward the directions appropriate for focusing and tracking by an electromagnetic interaction between the magnets 30 and 30', and the focusing and the tracking coils 52a, 52b, and 54, thereby performing the focusing and tracking operation of the objective lens 42.

In such situation, as described in relation to the prior art, vibration occurs. However, in the pickup actuator of the preferred embodiment such vibration is transmitted through the wire springs 44a and 44b, and directly damped by the damping fluid 80 disposed between the supporting plates 70 and 70' on which the wire springs 44a and 44b are hung, and the magnets 30 and 30'.

Accordingly, as indicated by a line "Ge" in Figure 7, the time "te" taken for the objective lens 22 to reach the designated position "T" and be settled therein is remarkably shortened, in comparison with the time spent with the conventional damper bond (see line "Gd" of Figure 7).

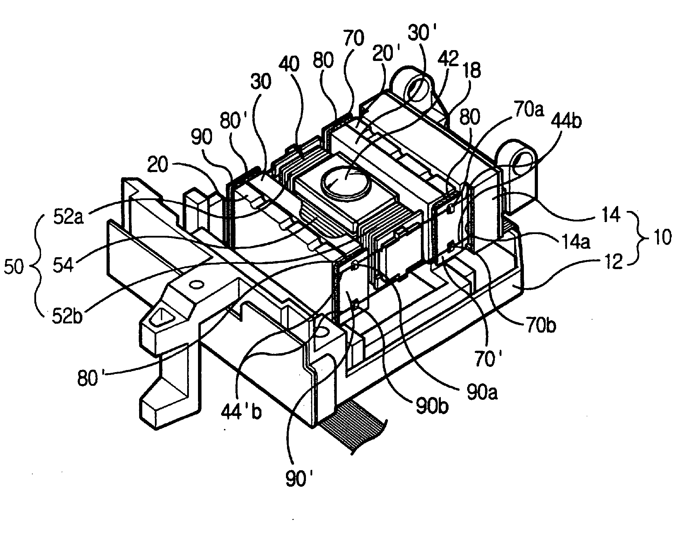

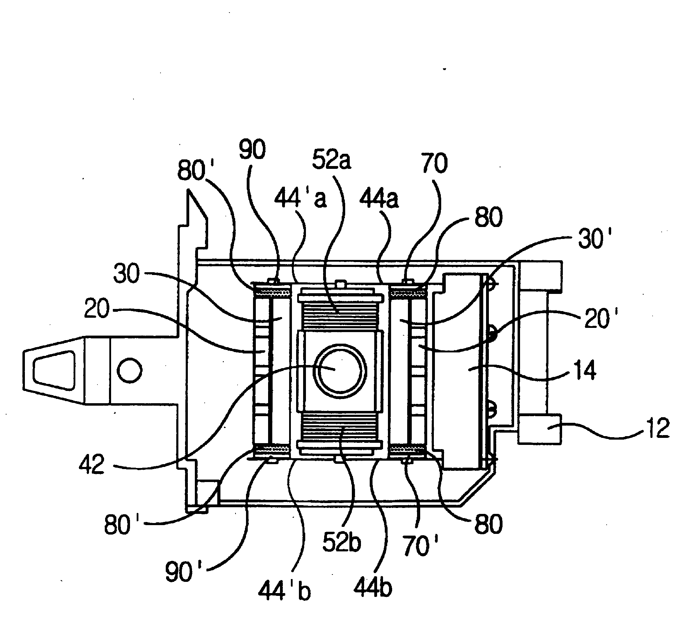

Figures 8 and 9 are perspective and plan views, respectively, for illustrating a pickup actuator according to a second preferred embodiment of the present invention.

As shown, the pickup actuator according to the second preferred embodiment of the present invention additionally has a second damping means which utilizes a damping fluid. Except for the second damping means, the construction of the pickup actuator according to the second preferred embodiment of the present invention is identical with that of the first preferred embodiment of the present invention described above.

The second damping means has two pairs of second wire springs 44'a and 44'b, a pair of second supporting plates 90 and 90', and a second damping fluid 80'. The second wire springs 44'a and 44'b are extended in a symmetrical relation with respect to the first wire springs 44a and 44b. The second supporting plates 90 and 90' are respectively disposed adjacently to the side portion of the magnet 30. The second damping fluid 80' is applied between the second supporting plates 90 and 90' and the side portion of the magnet 30, to damp the vibration occurred when the lens holder 40 is driven.

As shown in the figures, the second damping means of the pickup actuator according to the second preferred embodiment of the present invention is constructed identically with the first damping means. Thus, further description of the second damping means will be omitted.

The vibration damping processes in the pickup actuator according to the second preferred embodiment of the present invention also, is identical with the processes described in the first preferred embodiment of the present invention. The unique feature of the second preferred embodiment is that the vibration is damped by the first and the second damping fluids 80 and 80' applied between the supporting plates 70, 70', 90, and 90' and the magnets 30 and 30', wherein the supporting plates 70, 70', 90, and 90' are disposed on the first and the second wire springs 44a, 44b, 44'a, and 44'b which are disposed in a symmetrical relation with each other.

According to the pickup actuator described above, even when vibration occurs at the lens holder while the lens holder is moved toward the directions of focusing and tracking, the vibration is directly damped by the damping fluid applied between the supporting plates disposed on the wire springs and the magnets. Thus, the objective lens reaches the designated position and is settled therein more rapidly.

With the pickup actuator described herein, when vibration occurs at the lens holder, caused by the outside vibration and shock, the vibration of the lens holder is efficiently damped as described above. Therefore, the pickup actuator has a high adaptability so that it can be employed into the places having vibration of high intensity, such as an optical device of automobile.

Further, with the preferred pickup actuator since there is no need for the injection of damper bond into an inner portion of the holder supporting portion of the base member, the manufacturing process of the optical pickup becomes simple, and the manufacturing costs thereof accordingly decreases.

Meanwhile, the damping fluid utilized in the preferred pickup actuator can be used together with the conventional damper bond, and still provides a remarkable damping effect.

Although the magnetic fluid is suggested as the preferred damping fluid, the invention it is not limited to magnetic fluid only, but can be any material if it performs the same function described in the description of the present invention.

## Claims

1. A pickup actuator comprising:
a base member (10);
a pair of yokes (20,20') disposed on the base member (10) while being spaced from each other at a predetermined distance;
a pair of magnets (30,30') respectively attached along a front portion of each of said magnets (30, 30') to inner side surfaces of the yokes (20, 20');
the magnets (30, 30')having each a side portion substantially orthogonal to said front portion;
a lens holder (40) which is suspended by two pairs of wire springs (44a,44b) so as to be moved for focusing and tracking in a space defined between the magnets, and on which an objective lens (42) is mounted;
a driving coil (50) which is disposed on the lens holder (40) and drives the lens holder for focusing and tracking by electromagnetically interacting with the magnets;
a pair of supporting plates (70,70') disposed on the wire springs (44a,44b), said wire springs (44a, 44b) are supporting the lens holder (40), so that said supporting plates (70, 70') have a predetermined gap with the side portions of the magnets (30,30'); and
a damping fluid (80) which is applied between the pair of supporting plates (70,70') and both side portions of the magnets (30,30'), for damping the vibration occurred at the lens holder when the lens holder is driven.

2. The pickup actuator as claimed in claim 1, wherein the supporting plates (70,70') are positioned between the wire springs (44a,44b) so as to be in contact with each of the wire springs.

3. The pickup actuator as claimed in claim 2, wherein the wire springs (44a,44b) are disposed between the supporting plates (70,70') so as to be in contact with each of the supporting plates.

4. The pickup actuator as claimed in claim any of claims 1 to 3, further comprising:
a pair of second wire springs (44'a,44'b) extending from the both sides of the lens holder (40) in a symmetrical relation with respect to the first wire springs (44a,44b);
a pair of second supporting plates (90,90') respectively disposed on the second wire springs, while being spaced from side portions of the magnets at a predetermined distance; and
a second damping fluid (80') which is applied between the pair of second supporting plates and the side portions of the magnets being adjacent to the second supporting plates, and which damps the vibration occurring at the lens holder when the lens holder is driven.

5. The pickup actuator as claimed in claim 4, wherein the second supporting plates (90,90') are positioned between the second wire springs (44'a,44'b) so as to be in contact with each of the wire springs.

6. The pickup actuator as claimed in claim 5, wherein the second wire springs (44'a,44'b) are disposed between the second supporting plates (90,90') so as to be contacted with each of the second supporting plates.

7. The pickup actuator as claimed in any of claims 1 to 6, wherein the first and/or second supporting plates are made of a nonmagnetic material.

8. The pickup actuator as claimed in claim 7, wherein the nonmagnetic material is a plastics material.

9. The pickup actuator as claimed in any of claims 1 to 8, wherein the first and/or second damping fluid has a viscosity ranging from 1000cP to 2000cP at about 27°.

10. The pickup actuator as claimed in any of claims 1 to 9, wherein the first and/or second damping fluid is a magnetic fluid having a magnetic property in the magnetic field.

11. The pickup actuator as claimed in claim 10, wherein the magnetic fluid is magnetized to 100G ~ 200G in a magnetic field of 3~4k0e.

12. The pickup actuator as claimed in claim 11, wherein the magnetic fluid is in a colloid state, wherein magnetic particles are stably dispersed.

13. The pickup actuator as claimed in claim 12, wherein the magnetic particles comprise Fe₃O₄.

## Patentansprüche

1. Abtasterstellantrieb, der Folgendes umfasst:
ein Basiselement (10),
ein Paar von Jochs (20, 20'), die an dem Basiselement (10) angeordnet sind, während sie mit einem vorher festgelegten Abstand zueinander angeordnet sind,
ein Paar von Magneten (30, 30'), die jeweils längs eines vorderen Abschnitts jedes der Magneten (30, 30') an inneren Seitenflächen der Jochs (20, 20') befestigt sind,
wobei die Magneten (30, 30') jeder einen Seitenabschnitt, wesentlich senkrecht zu dem vorderen Abschnitt, haben,
einen Linsenhalter (40), der an zwei Paaren von Drahtfedern (44a, 44b) aufgehängt ist, um so zum Fokussieren und Nachführen in einem zwischen den Magneten definierten Raum bewegt zu werden, und an dem eine Objektivlinse (42) angebracht ist,
eine Antriebsspule (50), die an dem Linsenhalter (40) angeordnet ist und den Linsenhalter durch elektromagnetische Wechselwirkung mit den Magneten zum Fokussieren und Nachführen antreibt,
ein Paar von an den Drahtfedern (44a, 44b) angeordneten Stützplatten (70, 70'), wobei die Drahtfedern (44a, 44b) den Linsenhalter (40) stützen, so dass die Stützplatten (70, 70') einen vorher festgelegten Spalt zu den Seitenabschnitten der Magneten (30, 30') haben, und
ein Dämpfungsfluid (80), das zwischen dem Paar von Stützplatten (70, 70') und den beiden Seitenabschnitten der Magneten (30, 30') angewendet wird, um die am Linsenhalter auftretende Vibration zu dämpfen, wenn der Linsenhalter angetrieben wird.

2. Abtasterstellantrieb nach Anspruch 1, wobei die Stützplatten (70, 70') zwischen den Drahtfedern (44a, 44b) angeordnet sind, um so in Berührung mit jeder der Drahtfedern zu sein.

3. Abtasterstellantrieb nach Anspruch 2, wobei die Drahtfedern (44a, 44b) zwischen den Stützplatten (70, 70') angeordnet sind, um so in Berührung mit jeder der Stützplatten zu sein.

4. Abtasterstellantrieb nach einem der Ansprüche 1 bis 3, der ferner Folgendes umfasst:
ein Paar von zweiten Drahtfedern (44'a, 44'b), die sich von den beiden Seiten des Linsenhalters (40) aus in einer symmetrischen Beziehung zu den ersten Drahtfedern (44a, 44b) erstrecken,
ein Paar von zweiten Stützplatten (90, 90'), die jeweils an den zweiten Drahtfedern angeordnet sind, während sie mit einem vorher festgelegten Abstand zu den Seitenabschnitten der Magneten angeordnet sind, und
ein zweites Dämpfungsfluid (80'), das zwischen dem Paar von zweiten Stützplatten und den Seitenabschnitten der Magneten, die den zweiten Stützplatten benachbart sind, angewendet wird und das die am Linsenhalter auftretende Vibration dämpft, wenn der Linsenhalter angetrieben wird.

5. Abtasterstellantrieb nach Anspruch 4, wobei die zweiten Stützplatten (90, 90') zwischen den zweiten Drahtfedern (44'a, 44'b) angeordnet sind, um so in Berührung mit jeder der Drahtfedern zu sein.

6. Abtasterstellantrieb nach Anspruch 5, wobei die zweiten Drahtfedern (44'a, 44'b) zwischen den zweiten Stützplatten (90, 90') angeordnet sind, um so in Berührung mit jeder der zweiten Stützplatten gebracht zu werden.

7. Abtasterstellantrieb nach einem der Ansprüche 1 bis 6, wobei die ersten und/oder die zweiten Stützplatten aus einem nichtmagnetischen Material hergestellt sind.

8. Abtasterstellantrieb nach Anspruch 7, wobei das nichtmagnetische Material ein Kunststoffmaterial ist.

9. Abtasterstellantrieb nach einem der Ansprüche 1 bis 8, wobei das erste und/oder das zweite Dämpfungsfluid eine Viskosität hat, die bei etwa 27°C von 1000 cP bis 2000 cP reicht.

10. Abtasterstellantrieb nach einem der Ansprüche 1 bis 9, wobei das erste und/oder das zweite Dämpfungsfluid ein magnetisches Fluid ist, das in dem Magnetfeld eine magnetische Eigenschaft hat.

11. Abtasterstellantrieb nach Anspruch 10, wobei der Magnetfluss in einem Magnetfeld von 3~4 k0e auf 100 G~200 G magnetisiert wird.

12. Abtasterstellantrieb nach Anspruch 11, wobei das magnetische Fluid in einem Kolloidzustand ist, in dem magnetische Teilchen stabil verteilt sind.

13. Abtasterstellantrieb nach Anspruch 12, wobei die magnetischen Teilchen Fe₃O₄ umfassen.

## Revendications

1. Actionneur pour déplacer une tête de lecture comprenant :
un élément de base (10) ;
une paire de fourches (20, 20') disposées sur l'élément de base (10) tout en étant espacées l'une de l'autre à une distance prédéterminée ;
une paire d'aimants (30, 30') respectivement fixés le long d'une partie avant de chacun desdits aimants (30, 30') aux surfaces latérales internes des fourches (20, 20') ;
les aimants (30, 30') ayant chacun une partie latérale sensiblement orthogonale à ladite partie avant ;
un support de lentille (40) qui est suspendu par deux paires de ressorts en fil (44a, 44b) de manière à être déplacé pour mettre au point et suivre dans un espace défini entre les aimants, et sur lequel est montée une lentille de focalisation (42) ;
une bobine d'entraînement (50) qui est disposée sur le support de lentille (40) et entraîne le support de lentille pour mettre au point et suivre en interagissant de manière électromagnétique avec les aimants ;
une paire de plaques de support (70, 70') disposées sur les ressorts en fil (44a, 44b), lesdits ressorts en fil (44a, 44b) supportant le support de lentille (40), de telle sorte que lesdites plaques de support (70, 70') ont un espacement prédéterminé avec les parties latérales des aimants (30, 30') ; et
un fluide d'amortissement (80) qui est appliqué entre la paire de plaques de support (70, 70') et les deux parties latérales des aimants (30, 30'), destiné à amortir la vibration qui se produit au niveau du support de lentille lorsque le support de lentille est entraîné.

2. Actionneur pour déplacer une tête de lecture selon la revendication 1, dans lequel les plaques de support (70, 70') sont positionnées entre les ressorts en fil (44a, 44b) de manière à être en contact avec chacun des ressorts en fil.

3. Actionneur pour déplacer une tête de lecture selon la revendication 2, dans lequel les ressorts en fil (44a, 44b) sont disposés entre les plaques de support (70, 70') de manière à être en contact avec chacune des plaques de support.

4. Actionneur pour déplacer une tête de lecture selon l'une quelconque des revendications 1 à 3, comprenant :
une paire de seconds ressorts en fil (44'a, 44'b) s'étendant depuis les deux côtés du support de lentille (40) dans une relation symétrique par rapport aux premiers ressorts en fil (44a, 44b) ;
une paire de secondes plaques de support (90, 90') respectivement disposées sur les seconds ressorts en fil, tout en étant espacées des parties latérales des aimants à une distance prédéterminée ; et
un second fluide d'amortissement (80') qui est appliqué entre la paire de secondes plaques de support et les parties latérales des aimants étant adjacentes aux deuxièmes plaques de support, et qui amortit la vibration qui se produit au niveau du support de lentille lorsque le support de lentille est entraîné.

5. Actionneur pour déplacer une tête de lecture selon la revendication 4, dans lequel les secondes plaques de support (90, 90') sont positionnées entre les seconds ressorts en fil (44'a, 44'b) de manière à être en contact avec chacun des ressorts en fil.

6. Actionneur pour déplacer une tête de lecture selon la revendication 5, dans lequel les seconds ressorts en fil (44'a, 44'b) sont disposés entre les secondes plaques de support (90, 90') de manière à être en contact avec chacune des secondes plaques de support.

7. Actionneur pour déplacer une tête de lecture selon l'une quelconque des revendications 1 à 6, dans lequel les premières et/ou secondes plaques de support sont fabriquées dans un matériau non magnétique.

8. Actionneur pour déplacer une tête de lecture selon la revendication 7, dans lequel le matériau non magnétique est un matériau plastique.

9. Actionneur pour déplacer une tête de lecture selon l'une quelconque des revendications 1 à 8, dans lequel le premier et/ou le second fluide d'amortissement a une viscosité allant de 1 000 cP à 2 000 cP à environ 27°.

10. Actionneur pour déplacer une tête de lecture selon l'une quelconque des revendications 1 à 9, dans lequel le premier et/ou le deuxième fluide d'amortissement est un fluide magnétique ayant une propriété magnétique dans le champ magnétique.

11. Actionneur pour déplacer une tête de lecture selon la revendication 10, dans lequel le fluide magnétique est magnétisé à 100 G ~ 200 G dans un champ magnétique de 3~4 k0e.

12. Actionneur pour déplacer une tête de lecture selon la revendication 11, dans lequel le fluide magnétique est dans un état colloïdal, dans lequel les particules magnétiques sont dispersées de manière stable.

13. Actionneur pour déplacer une tête de lecture selon la revendication 12, dans lequel les particules magnétiques comprennent du Fe₃O₄.
